(19) Europäisches Patentamt / European Patent Office / Office européen des brevets

(11) **EP 4 506 308 A1**

(12) **EUROPÄISCHE PATENTANMELDUNG**

(43) Veröffentlichungstag:
**12.02.2025   Patentblatt 2025/07**

(21) Anmeldenummer: **23189947.7**

(22) Anmeldetag: **07.08.2023**

(51) Internationale Patentklassifikation (IPC):
*C01G 45/02* (2025.01)   *C01G 51/00* (2025.01)
*C01G 51/04* (2025.01)   *C01G 53/00* (2025.01)
*C01G 53/04* (2025.01)   *H01M 4/525* (2010.01)
*H01M 4/505* (2010.01)

(52) Gemeinsame Patentklassifikation (CPC):
**C01G 53/00; C01G 45/02; C01G 51/00; C01G 51/04; C01G 51/82; C01G 53/04; C01G 53/82;** C01P 2002/52; C01P 2002/54; C01P 2004/03; C01P 2004/32; C01P 2006/11; C01P 2006/80

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **H.C. Starck Tungsten GmbH**
**80335 München (DE)**

(72) Erfinder:
• **Meese-Marktscheffel, Juliane**
**38642 Goslar (DE)**
• **Olbrich, Armin**
**38723 Seesen (DE)**

• **Egeberg, Alexander**
**69168 Wiesloch (DE)**
• **Zeugner, Alexander**
**38302 Wolfenbüttel (DE)**
• **Wolff, Alexander**
**31141 Hildesheim (DE)**
• **Köthe, Johanna**
**38104 Braunschweig (DE)**
• **Scholz, Petra**
**38667 Harzburg (DE)**

(74) Vertreter: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **SPHÄRISCHE METALLMISCHHYDROXIDE UND VERFAHREN ZU DEREN HERSTELLUNG**

(57)   Die vorliegende Erfindung betrifft sphärische Metallmischhydroxide, Verfahren zu deren Herstellung sowie deren Verwendung als Vorstoffe für Kathodenaktivmaterialien von Li-Ionen/Polymer-Batterien.

Figur 1

**EP 4 506 308 A1**

## Beschreibung

Die vorliegende Erfindung betrifft sphärische Metallmischhydroxide, Verfahren zu deren Herstellung sowie deren Verwendung als Vorstoffe für Kathodenaktivmaterialien von Li-Ionen/Polymer-Batterien.

Li-Ionen/Polymer-Batterien (LIB) werden hauptsächlich in tragbaren Geräten mit hohem Energiebedarf eingesetzt, wie beispielsweise in Mobiltelefonen, Tablets, Laptops und power tools. In neuerer Zeit ist ihre Bedeutung im Rahmen der fortschreitenden Elektromobilisierung weiter gestiegen. Hier dienen sie als Energiespeicher in Elektroautos und Pedelecs sowie in Hybridfahrzeugen. In Zukunft wird sich die Nachfrage nach LIB im Rahmen des Ausbaus der Elektromobilität und der steigenden Nachfrage nach Elektroautos noch weiter verschärfen.

Allen in den LIB eingesetzten Materialien ist gemein, dass neben ihrem begrenzten Vorkommen ihre aufwendige Gewinnung in der Kritik steht, die in der Regel mit massiven Eingriffen in die Natur und den Wasserhaushalt der Abbauregionen verbunden ist. Daher liegt der Fokus bereits seit einiger Zeit auf der Entwicklung effektiver Verfahren zur Wiedergewinnung der in den LIB enthaltenen Wertmetallen. Die oben genannte Vervielfachung des Bedarfs wird zukünftig auch nicht allein aus Primärrohstoffquellen der verschiedenen Wertmetalle abgedeckt werden können, sowohl aus Verfügbarkeits- als auch aus Nachhaltigkeitsgründen. Neben dem Lithium selbst betrifft dies vor allem Nickel und Cobalt, sowie eingeschränkt aus Umweltgesichtspunkten auch Mangan, die als Hauptbestandteile von LIB-Kathodenmaterialen eingesetzt werden.

Der Stand der Technik beschreibt bereits eine Reihe von Verfahren zur Aufarbeitung gebrauchter LIB.

So beschreibt US 2013/0302226 ein Verfahren zum Recyceln von Batterien, umfassend: Erzeugen einer Lösung von Batteriematerialien aus verbrauchten Zellen; Ausfällung von Verunreinigungen aus der erzeugten Lösung; Einstellen der Lösung, um ein vorbestimmtes Verhältnis von erwünschten Materialien zu erreichen; und Ausfällen des erwünschten Materials in dem vorbestimmten Verhältnis, um Kathodenmaterial für eine neue Batterie mit dem vorbestimmten Verhältnis der erwünschten Übergangsmetalle zu bilden.

US 2017/0077564 offenbart ein Verfahren bei die Elemente Co, Ni, Al und Mn aus gebrauchten Lithium-Ionen-Batterien durch Extraktion gelöst werden, wobei abhängig von dem jeweiligen Anteil der Elemente weitere Rohstoffe zugesetzt werden können, um ein gewünschtes Verhältnis der Elemente zu erreichen.

Den vorgestellten Verfahren ist gemein, dass durch die Verfahrensführung nicht unerhebliche Mengen an Natrium in den Prozess eingebracht werden, die am Ende des Verfahrens wieder abgetrennt und entsorgt werden müssen. Erste Ansätze, die Aufarbeitung ohne Verwendung von Na durchzuführen sind beispielsweise in "A novel closed loop process for recycling spent Li-ion battery cathode materials", erschienen in International Journal of Green Energy, 18:15, 1597-1612, beschrieben. In dem Artikel stellen J. Zhang *et al* einen Ansatz vor, in dem LiOH und LizCOs anstelle der üblicherweise eingesetzten NaOH und $Na_2CO_3$ als Fällungsreagenzien verwendet werden. Anfallendes $Ui_2SO_4$ wird am Ende des Recyclingprozesses mittels Elektrolyse als LiOH und $H_2SO_4$ wiedergewonnen.

Die so gewonnenen Kathodenmaterialien bzw. die aus Recyclingprozessen gewonnenen Vorläuferverbindungen, in der Regel Mischhydroxide oder Carbonate, weisen allerdings oft eine mangelnde Sphärizität auf. Diese ist jedoch neben der chemischen Reinheit Voraussetzung für hohe Packungsdichten und damit hohe Energiedichten in der Batterie.

Es besteht insofern weiterhin der Bedarf nach Kathodenmaterialien, die für den Einsatz in LIB für Hochleistungsanwendungen geeignet sind. Die vorliegende Erfindung sieht ihre Aufgabe darin, auf diesen Bedarf zu reagieren und entsprechende Materialien sowie Verfahren zu deren Herstellung bereitzustellen.

Es wurde überraschend gefunden, dass diese Aufgabe durch ein Metallmischhydroxid mit sphärischer Morphologie und einem niedrigen Natriumgehalt gelöst wird.

Ein erster Gegenstand der vorliegenden Erfindung ist daher ein sphärisches Metallmischhydroxid, wobei sich das Metallmischhydroxid durch einen Natriumgehalt von 250 ppm oder weniger auszeichnet.

Die ppm-Angaben beziehen sich auf das Gesamtgewicht des Metallmischhydroxids. Der Natriumgehalt im Metallmischhydroxid kann beispielsweise mittels Atomabsorptionsspektrometrie bestimmt werden.

Im Rahmen der vorliegenden Erfindung umfasst der Begriff "Metall", soweit nicht anders bezeichnet, das Metall in allen seinen Oxidationsstufen.

Im Rahmen der vorliegenden Erfindung wird mit dem Begriff "sphärisch" die Morphologie des Pulvers beschrieben.

Bei der konventionellen Fällung von Mischhydroxiden durch Umsetzung von Metallsalzlösungen mit Natronlauge können hohe Na-Gehalte ein Problem darstellen, insbesondere bei kompakten größeren sphärischen Partikeln, bei denen die Natriumionen nicht so einfach aus den feinen Poren der Partikel ausgewaschen werden können. Um diesem Problem zu begegnen, könnte die Fällung der Mischhydroxide mit LiOH anstelle von NaOH durchgeführt werden, wie bereits im Stand der Technik vorgeschlagen. Allerdings muss auch bei dieser Fällungsmethode sichergestellt werden, dass die Partikel in hinreichend sphärischer Form erhalten werden.

Für den Einsatz in LIB sind insbesondere Pulver mit einer sphärischen Morphologie bevorzugt, die sich gleichzeitig durch geringe Gehalte an Verunreinigungen wie Natrium auszeichnen. Es wurde überraschend gefunden, dass sich Metallmischhydroxide, die die Vorteile einer sphärischen Morphologie und eines geringen Na-Gehalts in sich vereinen und somit besonders gut als Vorstoff für die Aktivmaterialien in Li-Ionen/Polymer-Batterien (im Weiteren als LIB bezeichnet) geeignet sind, aus den entsprechenden Metallsalzmischlösungen durch Umsetzung mit LiOH tatsächlich herstellen lassen.

Entsprechend ist eine Ausführungsform bevorzugt, in der der Natriumgehalt des Metallmischhydroxids 100 ppm oder weniger, besonders bevorzugt 50 ppm oder weniger, insbesondere 10 ppm oder weniger, speziell 5 ppm oder weniger beträgt.

In einer bevorzugten Ausführungsform weist das erfindungsgemäße Metallmischhydroxid einen Gehalt an Na von 0,01 ppm oder mehr, vorzugsweise 0,05 ppm oder mehr auf.

Für den Einsatz als Vorläufer für Kathodenmaterialien in LIB werden vor allem NCM (NiCoMn)- und NCA (NiCoAl)-Mischhydroxide oder Mischungen davon verwendet. Daher ist eine Ausführungsform bevorzugt, in der das Metallmischhydroxid die allgemeine Formel $M^{(w)}(OH)_{w-2a}O_a$ aufweist, mit $M = Ni_xCo_yMn_zAl_{1-(x+y+z)}$, wobei $0 \leq x \leq 1$; $0 \leq y \leq 1$; $0 \leq z \leq 1$; und $0,8 \leq (x+y+z) \leq 1$, w die mittlere Oxidationsstufe des Metalls angibt und $0 \leq a \leq 1$.

Weiterhin ist eine Ausführungsform bevorzugt, in der $2 \leq w \leq 3+z$ ist. Ebenfalls bevorzugt ist eine Ausführungsform, in der $2 \leq w \leq 3$, besonders bevorzugt $2 \leq w \leq 3-x$ und ganz besonders bevorzugt $2 \leq w \leq 3-(x+y+z)$ ist.

Eine besonders bevorzugte Ausführungsform zeichnet sich dadurch aus, dass $0 \leq a \leq 1-x$ und ganz besonders $0 \leq a \leq 1-(x+y+z)$ ist.

Die angegebenen Formeln und die Bereiche der Indizes sind nicht als Einschränkung des Erfindungsgedanken zu verstehen. Beispielsweise würde der Fachmann für eine typische NCA-Zusammensetzung mit $M=Ni_{0,8}Co_{0,15}Mn_0Al_{1-(0,80+0,15+0)}$ die Formel vervollständigen zu $Ni_{0,8}Co_{0,15}Al_{0,05}(OH)_{1,95}O_{0,05}$. In diesem Falle wäre das $Al^{3+}$-Ion perfekt ins Kristallgitter der $M^{2+}$-Ionen im Mischhydroxid eingebaut. Während sich ober und unterhalb der $M^{2+}$-Schichten für jedes $M^{2+}$-Ion ein $OH^-$-Ion befindet, ist an der Stelle, wo das $Al^{3+}$-Ion sitzt, ein $OH^-$-Ion durch ein 2-wertiges $O^{2-}$-Ion ersetzt. Allerdings kann das Aluminium auch separat als $AlOOH$ oder sogar $Al(OH)_3$ vorliegen, solange eine innige Mischung der Primärkristallite auf mikroskopischer Ebene vorliegt und sich der Natriumgehalt im erfindungsgemäßen Bereich bewegt und die Pulverpartikel eine hinreichend sphärische Form aufweisen. Das soeben gesagte gilt nicht nur für Al sondern beispielsweise auch für Co und Mn, die durch vollständige oder partielle Oxidation, beispielsweise bei nicht vollständigem Luftausschluss, leicht zu $CoOOH$ und $MnOOH$ oxidiert werden können. Im Falle von Mangan wären im gemeinsamen Kristallgitter sogar 2 Oxidionen pro Mn-Ion möglich, wenn dieses in die 4-wertige Oxidationsstufe oxidiert wird. Aber auch eine Ausscheidung von Braunstein $MnO_z$ auf mikroskopischer Ebene würde den erfindungsgemäßen Charakter der Partikel nicht beeinträchtigen, solange ein geringer Na-Gehalt bei hinreichender Sphärizität vorliegt.

Im Folgenden sind, ohne einschränkend zu wirken, einige Zusammensetzungen beispielhaft zusammengefasst. Der Fachmann kann sich daraus ohne Schwierigkeit durch z. B. Interpolation oder mit den obigen Definitionsformeln weitere Beispiele herleiten.

| Ni | Co | Mn | Al |
|---|---|---|---|
| x | y | z | 1-(x+y+z) |
| 0,999 | 0,001 | 0,000 | 0,000 |
| 0,001 | 0,999 | 0,000 | 0,000 |
| 0,001 | 0,000 | 0,999 | 0,000 |
| 0,800 | 0,000 | 0,000 | 0,200 |
| 0,800 | 0,200 | 0,000 | 0,000 |
| 0,800 | 0,150 | 0,000 | 0,050 |
| 0,900 | 0,100 | 0,000 | 0,000 |
| 0,900 | 0,050 | 0,000 | 0,050 |
| 0,900 | 0,000 | 0,100 | 0,000 |
| 0,100 | 0,000 | 0,900 | 0,000 |
| 0,333 | 0,333 | 0,333 | 0,000 |
| 0,500 | 0,250 | 0,250 | 0,000 |
| 0,600 | 0,200 | 0,200 | 0,000 |
| 0,800 | 0,100 | 0,100 | 0,000 |
| 0,800 | 0,050 | 0,100 | 0,050 |
| 0,900 | 0,050 | 0,050 | 0,000 |

(fortgesetzt)

| Ni | Co | Mn | Al |
|---|---|---|---|
| x | y | z | 1-(x+y+z) |
| 0,900 | 0,000 | 0,050 | 0,050 |
| 0,900 | 0,000 | 0,100 | 0,000 |

Neben dem geringen Natriumgehalt zeichnen sich die erfindungsgemäßen Metallmischhydroxide vor allem durch ihre Sphärizität aus, die sie insbesondere für den Einsatz in Hochleistungsbatterien empfiehlt. Die Sphärizität ist dabei eine Kenngröße dafür, inwieweit sich die Morphologie der Pulverpartikel der Form einer Kugel annähert, wobei eine Sphärizität von 1 einer Kugel entspricht. Die erfindungsgemäßen Metallmischhydroxide zeichnen sich besonders durch die sphäroidische Form der Partikel aus, deren Formfaktor einen Wert von größer 0,7, besonders bevorzugt von größer 0,9, besonders bevorzugt von größer 0,95, besonders bevorzugt von 0,98 bis 1 aufweist.

Der Formfaktor der Partikel kann aus REM-Aufnahmen der Pulver gemäß der in US 5476530, Spalten 7 und 8 und Figur 5 genannten Methode bestimmt werden. Der Formfaktor wird durch die Evaluierung des Partikelumfangs sowie der Partikelfläche und der Bestimmung des aus der jeweiligen Größe abgeleiteten Durchmessers bestimmt. Die genannten Durchmesser ergeben sich aus

$$d_U = U/\pi \qquad\qquad d_A = \left(4A/\pi\right)^{\frac{1}{2}}.$$

Der Formfaktor der Partikel f leitet sich ab aus dem Partikelumfang U und der Partikelfläche A gemäß:

$$f = \left(\frac{d_A}{d_U}\right)^2 = \left(\frac{4\pi A}{U^2}\right)$$

Im Falle eines idealen sphärischen Partikels sind $d_A$ und du gleich groß und es würde sich ein Formfaktor von genau eins ergeben.

Um die Leistung und Eigenschaften von LIB zu erhöhen, können dem Kathodenmaterial verschiedene Dopanden zugesetzt werden. Daher ist eine Ausführungsform bevorzugt, in der das erfindungsgemäße Metallmischhydroxid weiterhin Dopanden aufweist. Diese können insbesondere aus der Erdalkaligruppe, den Seltenen Erden oder anderen Nebengruppen stammen, vorzugsweise sind sie ausgewählt aus der Gruppe der Elemente Mg, Sc, Y, Ti, Zr, V, Nb, Ta, Cr, Mo und W. Auch weitere Hauptgruppenelemente wie z.B. Sn können als Dotierung enthalten sein. So sind erfindungsgemäß Ausführungsformen vorgesehen, in denen das Al ganz oder teilweise durch Dopanden ersetzt ist.

Die heute erwarteten und benötigten Leistungen von Batterien stellen eine materielle Herausforderung dar. Um möglichst hohe Kapazitäten zu erreichen, hat es sich als vorteilhaft erwiesen, wenn Pulver verwendet werden, die eine möglichst sphärische Morphologie aufweisen und so eine hohe Packungsdichte erzielen. Als gutes Maß für die spätere Packungsdichte hat sich die Klopfdichte des Materials erwiesen. Daher ist eine Ausführungsform des erfindungsgemäßen Metallmischhydroxids bevorzugt, in der das Metallmischhydroxid eine Klopfdichte von 1,5 $g/cm^3$ oder mehr, vorzugsweise 1,8 $/cm^3$ oder mehr, besonders bevorzugt 2,0 $g/cm^3$ oder mehr und insbesondere 2,2 $g/cm^3$ oder mehr aufweist, bestimmt gemäß ASTM 527.

Ein weiterer Gegenstand der vorliegenden Erfindung ist ein Verfahren zur Herstellung der erfindungsgemäßen Metallmischhydroxide, das Verfahren umfassend:

a) Bereitstellen einer Lösung umfassend $MSO_4$;

b) Zugeben von LiOH in Gegenwart von $NH_3$ unter Erhalt des Metallmischhydroxids und $Li_2SO_4$,

wobei M für eine Mischung aus mindestens zwei Metallen steht, die ausgewählt sind aus der Gruppe bestehend aus Ni, Mn, Co und Al.

In einer alternativen Ausführungsform wird das erfindungsgemäße Metallmischhydroxid vorzugsweise dadurch hergestellt, dass

a) eine Lösung umfassend $Al_2(SO_4)_3$ bereitgestellt wird;

b) die in Schritt a) bereitgestellte Lösung in eine Lösung umfassend LiOH eingetragen wird;

c) eine weitere Lösung umfassend $(Ni,Co,Mn)SO_4$ bereitgestellt wird;

d) die in Schritt b) erhaltene Lösung in Gegenwart von $NH_3$ mit der in Schritt c) bereitgestellten Lösung unter Erhalt des Mischmetallhydroxids und $Li_2SO_4$, vorzugsweise kontinuierlich, zusammengeführt wird; und

e) das so erhaltene Metallmischhydroxid abgetrennt wird.

Im Rahmen der vorliegenden Erfindung versteht der Fachmann die Bezeichnung $(Ni,Co,Mn)SO_4$ als Mischsulfat, das mindestens zwei von Ni, Co und Mn umfasst.

Die in dieser Ausführungsform eingesetzte $Al_2(SO_4)_3$-Lösung reagiert beim Vermischen mit der LiOH-Lösung unter Bildung von Lithiumaluminat $LiAl(OH)_4$ und $U_{i2}SO_4$ gemäß folgender Gleichung:

$$0{,}5\ Al_2(SO_4)_3 + 4\ LiOH \rightarrow LiAl(OH)_4 + 1{,}5\ Li_2SO_4$$

Besonders bevorzugt kann das Lithiumaluminat auch durch Auflösen von Aluminiumhydroxid in LiOH-Lösung hergestellt werden gemäß der Gleichung:

$$Al(OH)_3 + LiOH \rightarrow LiAl(OH)_4.$$

Die Bereitstellung des Aluminiums als Lithiumaluminat bietet den Vorteil, dass das Aluminium besonders gleichmäßig in das Gitter der Metallmischhydroxide eingebaut wird und nicht separat als Aluminiumhydroxid ausfällt.

Unabhängig davon, welche Variante des Verfahrens bevorzugt ist, kann das Lösungsmittel zur Herstellung der Lösungen im erfindungsgemäßen Verfahren je nach Bedarf gewählt werden, wobei jedoch wässrige Lösungsmittel, insbesondere Wasser und Wasser-Alkoholmischungen bevorzugt sind.

Das erfindungsgemäße Verfahren kann sowohl im Batch-Betrieb als auch kontinuierlich oder semi-kontinuierlich betrieben werden. Bevorzugt wird das erfindungsgemäße Verfahren semi-kontinuierlich oder kontinuierlich betrieben. Eine semi-kontinuierliche Verfahrensweise unterscheidet sich von einer kontinuierlichen Verfahrensführung darin, dass das Produkt kontinuierlich erzeugt wird, aber keine kontinuierliche Entnahme des Produkts erfolgt. Auf diese Weise kann beispielsweise die Feststoffkonzentration im Herstellungsprozess erhöht werden, was einen positiven Einfluss auf den Erhalt von möglichst kugelförmigen Pulverpartikeln hat.

Insbesondere um möglichst kugelförmige Pulverpartikel zu erhalten und eine möglichst hohe Sphärizität zu erzielen, hat es sich im Rahmen des erfindungsgemäßen Verfahrens als vorteilhaft erwiesen, bei vergleichsweise hohen Feststoffkonzentrationen zu arbeiten. Ohne an eine bestimmte Theorie gebunden zu sein, wird davon ausgegangen, dass durch die Stöße und Reibung, die die Partikel untereinander erfahren, ihre Sphärizität erhöht werden kann. Daher ist eine Ausführungsform der vorliegenden Erfindung bevorzugt, bei der das Verfahren bei einer Feststoffkonzentration von 50 g/l oder mehr, vorzugsweise 200 g/ oder mehr, besonders bevorzugt 400 g/l oder mehr, speziell 600 g/l oder mehr, durchgeführt wird.

Die vorteilhafte Feststoffkonzentration des erfindungsgemäßen Verfahrens kann beispielsweise über eine gleichmäßige Aufkonzentration der Suspension erreicht werden, etwa durch zumindest teilweise Entfernung der Mutterlauge während der Fällung. Daher ist eine Ausführungsform bevorzugt, in der das erfindungsgemäße Verfahren unter kontinuierlicher Abtrennung eines Teils der Mutterlauge durchgeführt wird. Mutterlauge bezeichnet im Rahmen der vorliegenden Erfindung die Flüssigkeit, aus der das Metallmischhydroxid abgeschieden wird.

Das Abtrennen eines Teils der Mutterlauge kann mit Hilfe verschiedener Verfahren erfolgen. Im Rahmen der vorliegenden Erfindung hat sich insbesondere die Abtrennung mittels statischem Schrägklärer als vorteilhaft herausgestellt, wodurch eine weitere Steigerung der Sphärizität des gewonnenen Metallmischhydroxids erzielt werden konnte. Daher ist eine Ausführungsform bevorzugt, in der die teilweise Abtrennung der Mutterlauge über einen Schrägklärer erfolgt.

Neben der Feststoffkonzentration kann die Morphologie des Pulvers weiterhin über die Konzentration an LiOH und $NH_3$ beeinflusst werden. In einer bevorzugten Ausführungsform beträgt die LiOH-Konzentration vorzugsweise 0,1 bis 2 g/l, besonders bevorzugt 0,3 bis 2 g/l. Weiterhin ist eine Ausführungsform bevorzugt, in der die $NH_3$-Konzentration 5 bis 20 g/l, vorzugsweise 5 bis 15 g/l beträgt. Die Konzentrationsangaben beziehen sich jeweils auf das eingesetzte Volumen.

Das erfindungsgemäße Metallmischhydroxid kann im Rahmen der Aufbereitung gebrauchter LIB gewonnen werden. In diesem Fall ist eine Ausführungsform bevorzugt, in der die Lösung umfassend $MSO_4$ oder $(Ni,Co,Mn)SO_4$ aus einem Aufarbeitungsprozess gebrauchter LIB stammt.

Eine Anwendung, die für das erfindungsgemäße Metallmischhydroxid anvisiert ist, ist die Verwendung als Vorläufer für Kathodenmaterialien in LIB. Für diesen Anwendungsbereich ist ein bestimmtes Verhältnis der Komponenten des Metallmischhydroxids gewünscht, das je nach Batterietyp und Art der Anwendung variieren kann und über die Leistung der Batterie entscheidet. In dem in herkömmlichen LIB verwendeten Nickel-Cobalt-Mangan-Mischungen (NCM) liegen die Metalle typischerweise in einem Verhältnis von 1:1:1 vor. In letzter Zeit geht der Trend jedoch zu nickelangereicherten Pulvern, bei denen die Komponenten in einem Verhältnis von Ni:Co:Mn von $^6/_{10}:^2/_{10}:^2/_{10}$, $^8/_{10}:^1/_{10}:^1/_{10}$ oder sogar $^9/_{10}:^{0.5}/_{10}:^{0.5}/_{10}$ beziehungsweise Zwischenformen wie $^8/_{10}:^{1.5}/_{10}:^{0.5}/_{10}$ davon vorliegen. Das Verhältnis der Bestandteile des Metallmischhydroxids kann vorteilhafterweise bereits während seines Herstellungsverfahrens eingestellt werden. Daher ist eine Ausführungsform bevorzugt, in der das Verfahren weiterhin einen Schritt umfasst, in dem die Stöchiometrie des Metallmischhydroxids eingestellt wird. Das Einstellen der Stöchiometrie kann entweder durch Zugabe der entsprechenden Komponente oder Komponenten oder gezielte partielle Abtrennung erfolgen.

Im Rahmen der vorliegenden Erfindung ist die gezielte Abtrennung zur Einstellung des stöchiometrischen Verhältnisses bevorzugt, da dadurch der Einsatz von zusätzlichem Material und die damit verbundenen Nachteile vermieden werden können. Diese Vorgehensweise ist besonders vorteilhaft, als dass damit der Umstellung des bisherigen Kathodenmaterials, in dem Ni, Co und Mn in einem Verhältnis von 1:1:1 vorliegen, auf die nickelreicheren Materialien begegnet werden kann.

Um die Leistung und Eigenschaften von LIB zu erhöhen, können dem Kathodenmaterial verschiedene Dopanden zugesetzt werden. Im Rahmen des erfindungsgemäßen Verfahrens hat es sich als vorteilhaft erwiesen, diese Dopanden beispielsweise durch Ko-Fällung in das Metallmischhydroxid einzubringen. Daher ist eine Ausführungsform des erfindungsgemäßen Verfahrens bevorzugt, in dem weitere Metalle zugegeben werden, vorzugsweise in Form ihrer Sulfate. Die weiteren Metalle können aus der Erdalkaligruppe, den Seltenen Erden oder anderen Nebengruppen stammen, vorzugsweise ausgewählt aus den Elementen Mg, Sc, Y ,Ti, Zr, V, Nb, Ta, Cr, Mo und W. Auch weitere Hauptgruppenelemente wie z.B. Sn können als Dotierung beigegeben werden. Vorzugsweise werdend Dopanden den Sulfat-Lösungen $MSO_4$ und $(Ni,Co,Mn)SO_4$ zugegeben.

Erfindungsgemäß wird das Metallmischhydroxid durch Umsetzung mit LiOH aus den entsprechenden Sulfaten gewonnen, wobei als Nebenprodukt $Li_2SO_4$ erhalten wird. Dieses $Li_2SO_4$ kann vorteilhafterweise weiterer Nutzung zugeführt werden. Vorzugsweise wird das im Rahmen des erfindungsgemäßen Verfahrens anfallende $Li_2SO_4$ mittels Elektrolyse in LiOH und $H_2SO_4$ umgewandelt. Beides wird vorzugsweise wieder dem Reaktionskreislauf zugeführt, so dass ein geschlossener Verfahrenskreislauf entsteht. Für die Elektrolyse ist eine Membranelektrolyse bevorzugt, insbesondere eine Elektrodialyse und ganz besonders eine Elektrodialyse mit bipolaren Membranen. Besonders bevorzugt ist eine Mehrkammerelektrolyse mit Kationenaustauschermembran und Anionenaustauschermembran.

Aufgrund seiner Sphärizität und seines niedrigen Natriumgehalts eignet sich das erfindungsgemäße Metallmischhydroxid insbesondere für die Verwendung in LIB. Ein weiterer Gegenstand der vorliegenden Erfindung ist daher die Verwendung des erfindungsgemäßen Metallmischhydroxids als Kathodenvorläufermaterial in der Herstellung von Batterien, insbesondere LIB.

Die vorliegende Erfindung wird anhand des folgenden Beispiels näher erläutert, wobei dieses keinesfalls als Einschränkung des Erfindungsgedanken zu verstehen ist.

Zur Herstellung von sphärischem NCM-Material mittels LiOH als Fällungsreagenz wurden in einen 10-Liter-Rührreaktor 0,41 l/h Metallsulfatlösung, enthaltend 10 g/l Metallsulfatsalzlösung enthaltend 32,76 g/l Nickel, 1,70 g/l Mangan und 1,83 g/l Cobalt sowie 0,31 l/h einer LiOH-Lösung, enthaltend 98,7 g/l LiOH und 0,11 l/h einer $NH_3$-Lösung, enthaltend 225 g/l $NH_3$ kontinuierlich zudosiert. Der Reaktor wurde mittels eines Rührers mit 500 Upm gut durchmischt und über eine Mantelheizung auf einer Temperatur von 50°C gehalten. Aus dem Reaktor wurden über ein Tauchrohr jede Stunde ca. 0,87 l Suspension innerhalb einer Minute herausgefördert, um Sedimentation in dem Entnahmerohr zu verhindern. Der Füllstand im Reaktor wies daher ein Sägezahnprofil über die Zeit auf, wobei die Verweilzeitcharakteristik nahe einem Vollkontibetrieb war.

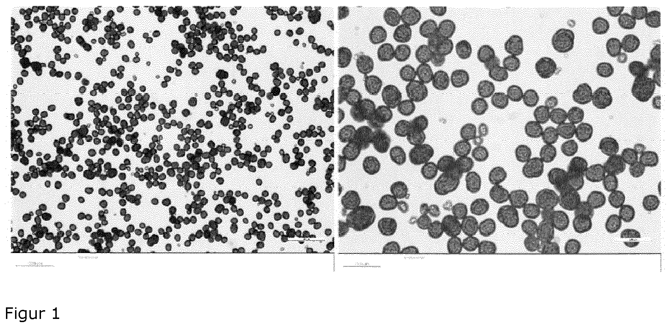

Figur 1 zeigt Lichtmikroskopaufnahmen des erhaltenen Metallmischhydroxids nach 36 Stunden Verweilzeit bei 500-facher Vergrößerung (links) und 200-facher Vergrößerung (rechts). Deutlich ist die sphärische Form der Partikel zu erkennen.

**Patentansprüche**

1.    Sphärisches Metallmischhydroxid, **dadurch gekennzeichnet, dass** das Metallmischhydroxid einen Natriumgehalt von 250 ppm oder weniger aufweist.

2.    Metallmischhydroxid gemäß Anspruch 1 , **dadurch gekennzeichnet, dass** das Metallmischhydroxid die allgemeine Formel $M^{(w)}(OH)_{w-2a}O_a$ aufweist, mit $M = Ni_xCo_yMn_zAl_{1-(x+y+z)}$, wobei $0 \leq x \leq 1$; $0 \leq y \leq 1$; $0 \leq z \leq 1$; und $0,8 \leq (x+y+z) \leq 1$,

w die mittlere Oxidationsstufe des Metalls angibt und $0 \leq a \leq 1$.

3. Metallmischhydroxid gemäß wenigstens einem der vorangehenden Ansprüche, **dadurch gekennzeichnet, dass** der Formfaktor der Partikel einen Wert von größer 0,7, besonders bevorzugt von größer 0,9, besonders bevorzugt von größer 0,95, besonders bevorzugt von 0,98 bis 1 aufweist.

4. Metallhydroxid gemäß wenigstens einem der vorangehenden Ansprüche, **dadurch gekennzeichnet, dass** das Metallmischhydroxid 100 ppm oder weniger, besonders bevorzugt 50 ppm oder weniger, ganz besonders bevorzugt 10 ppm oder weniger und speziell 5 ppm oder weniger Natrium aufweist.

5. Metallmischhydroxid gemäß wenigstens einem der vorangehenden Ansprüche, **dadurch gekennzeichnet, dass** das Metallmischhydroxid eine Klopfdichte von 1,5 $g/cm^3$ oder mehr, vorzugsweise 1,8 $g/cm^3$ oder mehr, besonders bevorzugt 2,0 $g/cm^3$ oder mehr, insbesondere 2,2 $g/cm^3$ oder mehr aufweist, bestimmt gemäß ASTM 527.

6. Verfahren zur Herstellung von sphärischen Metallmischhydroxiden gemäß wenigstens einem der vorangehenden Ansprüche, das Verfahren umfassend:

   a) Bereitstellen einer Lösung umfassend $MSO_4$;
   b) Zugeben von LiOH in Gegenwart von $NH_3$ unter Erhalt des Metallmischhydroxids und $Li_2SO_4$,

   wobei M für eine Mischung aus mindestens zwei Metallen steht, die ausgewählt sind aus der Gruppe bestehend aus Ni, Mn, Co und Al.

7. Verfahren zur Herstellung von sphärischen Metallmischhydroxiden gemäß wenigstens einem der Ansprüche 1 bis 5, **dadurch gekennzeichnet, dass**

   a) eine Lösung umfassend $Al_2(SO_4)_3$ bereitgestellt wird;
   b) die in Schritt a) bereitgestellte Lösung in eine Lösung umfassend LiOH eingetragen wird;
   c) eine weitere Lösung umfassend $(Ni,Co,Mn)SO_4$ bereitgestellt wird;
   d) die in Schritt b) erhaltene Lösung in Gegenwart von $NH_3$ mit der in Schritt c) bereitgestellten Lösung unter Erhalt des Mischmetallhydroxids und $Li_2SO_4$ zusammengeführt wird; und
   e) das so erhaltene Metallmischhydroxid abgetrennt wird.

8. Verfahren gemäß wenigstens einem der Ansprüche 6 bis 7, **dadurch gekennzeichnet, dass** das Verfahren semi-kontinuierlich oder kontinuierlich betrieben wird.

9. Verfahren gemäß wenigstens einem der Ansprüche 6 bis 8, **dadurch gekennzeichnet, dass** das Verfahren unter kontinuierlicher Abtrennung eines Teils der Mutterlauge durchgeführt wird.

10. Verfahren gemäß Anspruch 9, **dadurch gekennzeichnet, dass** die Abtrennung der Mutterlauge über einen Schrägklärer erfolgt.

11. Verfahren gemäß wenigstens einem der Ansprüche 6 bis 10, **dadurch gekennzeichnet, dass** das Verfahren bei einer Feststoffkonzentration von 50 g/l oder mehr, vorzugsweise 200 g/ oder mehr, besonders bevorzugt 400 g/l oder mehr, speziell 600 g/l oder mehr, durchgeführt wird.

12. Verfahren gemäß wenigstens einem der Ansprüche 6 bis 11, **dadurch gekennzeichnet, dass** das Verfahren weiterhin einen Schritt des Einstellens der Stöchiometrie des Metallmischhydroxids umfasst.

13. Verfahren gemäß wenigstens einem der Ansprüche 6 bis 12, **dadurch gekennzeichnet, dass** das Verfahren weiterhin einen Schritt umfasst, in dem das anfallende $Li_2SO_4$ mittels Elektrolyse in LiOH und $H_2SO_4$ umgewandelt wird.

14. Verfahren gemäß Anspruch 13, **dadurch gekennzeichnet, dass** LiOH und/oder $H_2SO_4$ wieder dem Reaktionskreislauf zugeführt wird.

15. Verwendung eines Metallmischhydroxids gemäß wenigstens einem der Ansprüche 1 bis 5 als Kathodenvorläufermaterial für Batterien, insbesondere Li-Ionen/Polymerbatterien.

Figur 1

EP 4 506 308 A1

Europäisches
Patentamt

European
Patent Office

Office européen
des brevets

# EUROPÄISCHER RECHERCHENBERICHT

Nummer der Anmeldung

EP 23 18 9947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 023 610 A1 (ZHEJIANG PAWA NEW ENERGY CO LTD [CN]) 6. Juli 2022 (2022-07-06) * Absätze [0001], [0011]; Ansprüche; Beispiel 1 * | 1-15 | INV. C01G45/02 C01G51/00 C01G51/04 C01G53/00 |
| X | US 11 142 466 B2 (NEMASKA LITHIUM INC [CA]) 12. Oktober 2021 (2021-10-12) * Ansprüche; Abbildungen 1, 27; Beispiel 10 * | 1-15 | C01G53/04 H01M4/525 H01M4/505 |
| X | EP 3 916 857 A1 (SUMITOMO METAL MINING CO [JP]) 1. Dezember 2021 (2021-12-01) * Absätze [0062], [0070]; Ansprüche * | 1,2,4,15 | |
| X A | CN 102 432 070 A (JIANGXI BONENG NEW MATERIAL CO LTD) 2. Mai 2012 (2012-05-02) * Ansprüche * | 1,2,4,15 6-14 | |
| X | EP 3 642 160 B1 (UMICORE NV [BE]) 20. Januar 2021 (2021-01-20) * Ansprüche 1,13; Beispiel 1 * | 1,2,4,5 | |
| A,D | JUNG JOEY CHUNG-YEN ET AL: "A NOVEL CLOSED LOOP PROCESS FOR RECYCLING SPENT Li-ION BATTERY CATHODE MATERIALS", INTERNATIONAL JOURNAL OF GREEN ENERGY, Bd. 18, Nr. 15, 10. Juli 2021 (2021-07-10), Seiten 1597-1612, XP093019331, US ISSN: 1543-5075, DOI: 10.1080/15435075.2021.1914631 * das ganze Dokument * | 1-5 | RECHERCHIERTE SACHGEBIETE (IPC) C01G H01M |
| A | JP 2020 510981 A (NONE DISCLOSED) 9. April 2020 (2020-04-09) * Absätze [0039], [0043], [0044], [0048]; Ansprüche * | 1-15 | |

Der vorliegende Recherchenbericht wurde für alle Patentansprüche erstellt

| Recherchenort | Abschlußdatum der Recherche | Prüfer |
|---|---|---|
| München | 19. Januar 2024 | Nobis, Barbara |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

9

## EP 4 506 308 A1

**ANHANG ZUM EUROPÄISCHEN RECHERCHENBERICHT
ÜBER DIE EUROPÄISCHE PATENTANMELDUNG NR.**

EP 23 18 9947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2024

| Im Recherchenbericht angeführtes Patentdokument | Datum der Veröffentlichung | Mitglied(er) der Patentfamilie | Datum der Veröffentlichung |
|---|---|---|---|
| EP 4023610 A1 | 06-07-2022 | CN 111874958 A | 03-11-2020 |
|  |  | EP 4023610 A1 | 06-07-2022 |
|  |  | JP 7376862 B2 | 09-11-2023 |
|  |  | JP 2022550791 A | 05-12-2022 |
|  |  | KR 20220062344 A | 16-05-2022 |
|  |  | WO 2022033351 A1 | 17-02-2022 |
| US 11142466 B2 | 12-10-2021 | AU 2018373507 A1 | 02-07-2020 |
|  |  | CA 3083136 A1 | 31-05-2019 |
|  |  | CA 3155660 A1 | 31-05-2019 |
|  |  | CN 111867980 A | 30-10-2020 |
|  |  | CN 113772750 A | 10-12-2021 |
|  |  | EP 3713877 A1 | 30-09-2020 |
|  |  | JP 7194185 B2 | 21-12-2022 |
|  |  | JP 7298004 B2 | 26-06-2023 |
|  |  | JP 2021504885 A | 15-02-2021 |
|  |  | JP 2023051938 A | 11-04-2023 |
|  |  | JP 2023134439 A | 27-09-2023 |
|  |  | KR 20200109304 A | 22-09-2020 |
|  |  | KR 20220070545 A | 31-05-2022 |
|  |  | KR 20230151548 A | 01-11-2023 |
|  |  | US 2020407237 A1 | 31-12-2020 |
|  |  | US 2022002168 A1 | 06-01-2022 |
|  |  | US 2023159348 A1 | 25-05-2023 |
|  |  | WO 2019100159 A1 | 31-05-2019 |
| EP 3916857 A1 | 01-12-2021 | CN 113330606 A | 31-08-2021 |
|  |  | EP 3916857 A1 | 01-12-2021 |
|  |  | WO 2020152770 A1 | 30-07-2020 |
|  |  | WO 2020152882 A1 | 30-07-2020 |
| CN 102432070 A | 02-05-2012 | KEINE | |
| EP 3642160 B1 | 20-01-2021 | CN 110799460 A | 14-02-2020 |
|  |  | EP 3642160 A1 | 29-04-2020 |
|  |  | HU E053713 T2 | 28-07-2021 |
|  |  | JP 7104075 B2 | 20-07-2022 |
|  |  | JP 2020524653 A | 20-08-2020 |
|  |  | KR 20200022439 A | 03-03-2020 |
|  |  | PL 3642160 T3 | 14-06-2021 |
|  |  | US 2020198986 A1 | 25-06-2020 |
|  |  | WO 2018234112 A1 | 27-12-2018 |
| JP 2020510981 A | 09-04-2020 | CN 110663127 A | 07-01-2020 |
|  |  | EP 3596766 A1 | 22-01-2020 |
|  |  | JP 6985406 B2 | 22-12-2021 |

EPO FORM P0461

Für nähere Einzelheiten zu diesem Anhang : siehe Amtsblatt des Europäischen Patentamts, Nr.12/82

**EP 4 506 308 A1**

## ANHANG ZUM EUROPÄISCHEN RECHERCHENBERICHT
## ÜBER DIE EUROPÄISCHE PATENTANMELDUNG NR.

EP 23 18 9947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2024

| Im Recherchenbericht angeführtes Patentdokument | Datum der Veröffentlichung | Mitglied(er) der Patentfamilie | Datum der Veröffentlichung |
|---|---|---|---|
| | | JP 2020510981 A | 09-04-2020 |
| | | KR 20190121394 A | 25-10-2019 |
| | | US 2020006769 A1 | 02-01-2020 |
| | | WO 2018167533 A1 | 20-09-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130302226 A
- US 20170077564 A
- US 5476530 A

**In der Beschreibung aufgeführte Nicht-Patentliteratur**

- A novel closed loop process for recycling spent Li-ion battery cathode materials. *International Journal of Green Energy*, vol. 18 (15), 1597-1612